# EUROPEAN PATENT APPLICATION

(11) **EP 4 624 894 A1**
(43) Date of publication of application: **01.10.2025**
(21) Application number: 24800212.3
(22) Date of filing: 29.04.2024
(51) Int. Cl.: G01N 3/12, H01M 10/42, H01M 50/211

(54) **TESTING MACHINE**

(30) Priority: 04.05.2023 KR 20230058721
(71) Applicant: LG Energy Solution, Ltd., Seoul 07335 (KR)
(72) Inventor: BAE, Seung-Hwan, Daejeon 34122 (KR); LEE, Chang-Je, Daejeon 34122 (KR); YOON, Jong-Kyu, Daejeon 34122 (KR); HYUN, Sin-Hu, Daejeon 34122 (KR); LEE, Yong-Ki, Daejeon 34122 (KR)
(74) Representative: Plasseraud IP
(86) International application number: PCT/KR2024/005789
(87) International publication number: WO 2024/228528

(57) **Abstract**

A testing machine is disclosed. The testing machine according to an embodiment of the present disclosure is a testing machine for testing a test case of a battery module including a test frame having an open front surface and an end plate coupled to the front surface of the test frame, and includes a first pressing module that is coupled to a first side plate of the test frame; and a second pressing module that is coupled to a second side plate of the test frame opposite the first side plate.

## Description

### TECHNICAL FIELD

The present disclosure relates to a testing machine.

The present application claims priority to Korean Patent Application No. 10-2023-0058721 filed on May 4, 2023 in the Republic of Korea, the disclosure of which is incorporated herein by reference.

### BACKGROUND

There has been a dramatic increase in demand for portable electronic products such as laptop computers, video cameras and mobile phones, and with the widespread use of robots and electric vehicles, many studies are being made on high performance secondary batteries that can be recharged repeatedly.

Currently, commercially available secondary batteries include nickel-cadmium batteries, nickel-hydrogen batteries, nickel-zinc batteries, lithium secondary batteries and the like, and among them, lithium secondary batteries have little or no memory effect, and thus they are gaining more attention than nickel-based secondary batteries for their advantages that recharging can be done whenever it is convenient, the self-discharge rate is very low and the energy density is high.

In general, lithium secondary batteries may be classified into can-type secondary batteries in which an electrode assembly is included in a metal can and pouch-type secondary batteries in which an electrode assembly is included in a pouch of an aluminum laminate sheet, according to the shape of an outer packaging material.

A battery module may include a frame and an end plate. Additionally, the frame and the end plate may be coupled by welding. The frame may accommodate battery cells. Additionally, swelling may occur in the battery cell as the battery cell repeatedly charges and discharges. As a consequence, the frame may be subjected to expansion pressure, causing damage to the weld coupling part between the frame and the end plate. Accordingly, there is a need for a method or apparatus for evaluating fatigue life of the weld coupling part between the frame and the end plate.

### SUMMARY

### Technical Problem

An object of the present disclosure is to solve these and other problems.

Another object of the present disclosure is to provide an apparatus for measuring fatigue life of a coupling part between a frame and an end plate.

Still another object of the present disclosure is to provide a method for measuring fatigue life of a coupling part between a frame and an end plate.

### Technical Solution

To achieve the above-described objectives, a testing machine according to an embodiment of the present disclosure is a testing machine for testing a test case of a battery module including a test frame having an open front surface and an end plate coupled to the front surface of the test frame, and includes a first pressing module that is coupled to a first side plate of the test frame; and a second pressing module that is coupled to a second side plate of the test frame opposite the first side plate.

Additionally, the first pressing module or the second pressing module may be movably configured in a top-down direction.

Additionally, the first pressing module may include a pressing bar extended in a front-rear direction; and a pressing unit extended downward from the pressing bar and coupled to the first side plate.

Additionally, the pressing unit may include a plurality of pressing units and the plurality of pressing units may be arranged along a length direction of the pressing bar.

Additionally, the pressing unit may be movably configured along a length direction of the pressing bar.

Additionally, the test frame may include a hole that is extended and passes through the first side plate, and the pressing unit may include a coupling bar extended downward from the pressing bar, and passing through the hole; and a pressing portion disposed in the coupling bar and located at an internal space of the test frame.

Additionally, a diameter of the pressing portion may be smaller than a diameter of the hole, and the coupling bar may be rotatably configured.

Additionally, the coupling bar may have a screw thread along a length direction, the pressing unit may further include a fixing portion coupled to the screw thread of the coupling bar, and the first side plate may be fixed between the pressing portion and the fixing portion.

Additionally, the hole may extend in a front-rear direction or a left-right direction.

Additionally, each of the first pressing module and the second pressing module may include a plurality of pressing units, and the plurality of pressing units of the first pressing module and the plurality of pressing units of the second pressing module may be symmetrical with respect to the test frame.

A test method according to an aspect of the present disclosure uses the testing machine according to the present disclosure.

The test method may include stopping the first pressing module and moving the second pressing module to stretch the test frame in the top-down direction.

Additionally, the test method may include stopping the first pressing module and moving the second pressing module to make a repetitive reciprocating motion.

### Advantageous Effects

According to at least one of the embodiments of the present disclosure, it may be possible to provide the apparatus for measuring fatigue life of the coupling part between the frame and the end plate.

According to at least one of the embodiments of the present disclosure, it may be possible to provide the method for measuring fatigue life of the coupling part between the frame and the end plate.

### BRIEF DESCRIPTION OF THE DRAWINGS

The accompanying drawings illustrate exemplary embodiments of the present disclosure and together with the following detailed description, serve to provide a better understanding of the technical aspect of the present disclosure, and thus the present disclosure should not be construed as being limited to the drawings.
FIG. 1 is a diagram showing an embodiment of a battery module.
FIG. 2 is an exploded view showing some components of a battery module.
FIG. 3 is a cross-sectional view of FIG. 1, taken along the line A-A'.
FIG. 4 is a diagram showing an example of a test case used in a testing machine according to an embodiment of the present disclosure.
FIG. 5 is a diagram showing another example of a test case used in a testing machine according to an embodiment of the present disclosure.
FIG. 6 is a diagram showing an example of a test case partially coupled to a testing machine according to an embodiment of the present disclosure.
FIG. 7 is a diagram showing an example of a test case completely coupled to a testing machine according to an embodiment of the present disclosure.
FIG. 8 is a diagram showing a pressing unit of a testing machine according to an embodiment of the present disclosure.
FIG. 9 is a diagram showing the coupling between a coupling bar and a pressing unit.
FIG. 10 is a diagram showing an example of coupling a test case to a pressing unit of a testing machine according to an embodiment of the present disclosure.
FIG. 11 is a cross-sectional view of FIG. 7, taking along the line B-B'.
FIG. 12 is a diagram showing a test case without load applied by a testing machine according to an embodiment of the present disclosure.
FIG. 13 is a diagram showing a test case with load applied by a testing machine according to an embodiment of the present disclosure.
FIG. 14 is a graph showing an example of a method using a testing machine according to an embodiment of the present disclosure.

### DETAILED DESCRIPTION

Hereinafter, exemplary embodiments of the present disclosure will be described in detail with reference to the accompanying drawings. Prior to the description, it should be understood that the terms or words used in the specification and the appended claims should not be construed as limited to general and dictionary meanings, but rather interpreted based on the meanings and concepts corresponding to the technical aspect of the present disclosure on the basis of the principle that the inventor is allowed to define terms appropriately for the best explanation.

Therefore, the embodiments described herein and illustrations in the accompanying drawings are exemplary embodiments of the present disclosure to describe the technical aspect of the present disclosure and are not intended to be limiting, and thus it should be understood that a variety of other equivalents and modifications could have been made at the time that the application was filed.

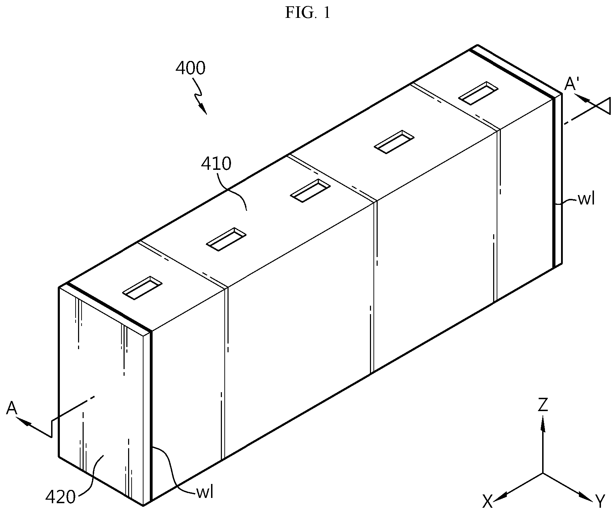

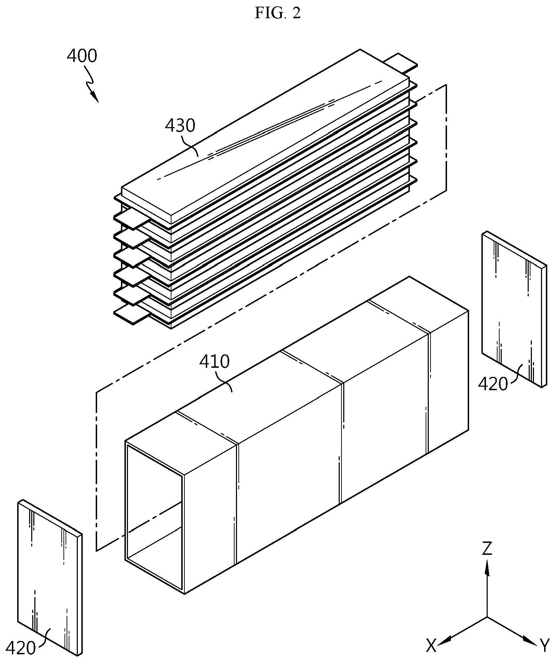

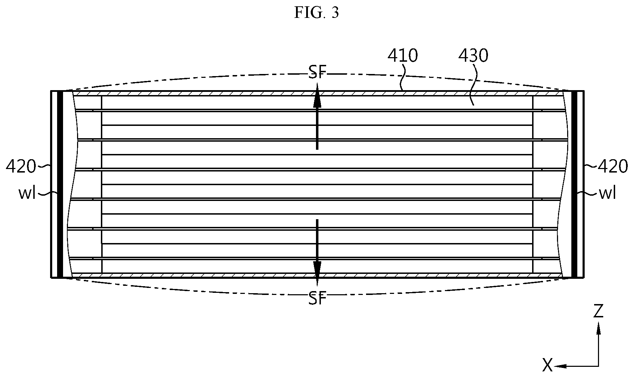

FIG. 1 is a diagram showing an embodiment of a battery module 400. FIG. 2 is an exploded view showing some components of the battery module 400. FIG. 3 is a cross-sectional view of FIG. 1, taken along the line A-A'.

Referring to FIGs. 1 to 3, the battery module 400 may include a frame 410, an end plate 420 and a plurality of battery cells 430.

The frame 410 may provide an internal space. Additionally, the frame 410 may have a rectangular parallelepiped shape that is open to the front and rear sides or in X axis direction.

The end plate 420 may be disposed or coupled to each of the front side and the rear side of the frame 410. Alternatively, the end plate 420 may be disposed or coupled to each open end of the frame 410. The end plate 420 and the frame 410 may be coupled by welding. Additionally, a weld line wl may be formed along the periphery of the end plate 420.

The plurality of battery cells 430 may be received in the internal space of the frame 410. In this instance, the battery cell 430 may refer to a secondary battery. In particular, the battery cell 430 may be a pouch-shaped secondary battery. The plurality of battery cells 430 may be stacked in the frame 410. For example, the plurality of battery cells 430 may be stacked in the top-down direction or Z axis direction.

As the plurality of battery cells 430 repeatedly charges and discharges, swelling may occur in the battery cell 430. When swelling occurs in the plurality of battery cells 430, the pressure may be generated in the top-down direction or Z axis direction. The frame 410 may be subjected to the pressure SF that swells up. In this instance, damage may occur to the weld line wl that couples the frame 410 to the end plate 420. Accordingly, the coupling between the frame 410 and the end plate 420 may be weakened or broken.

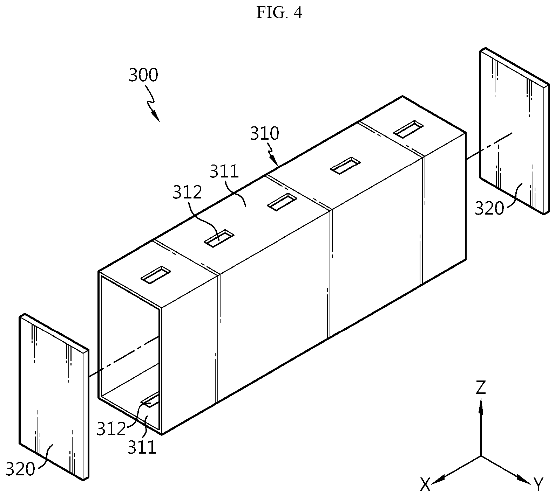

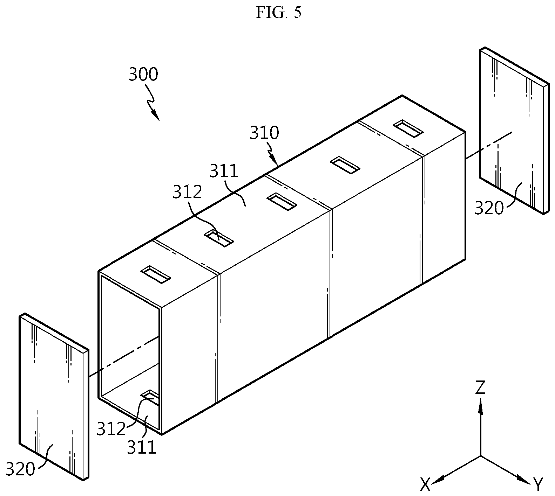

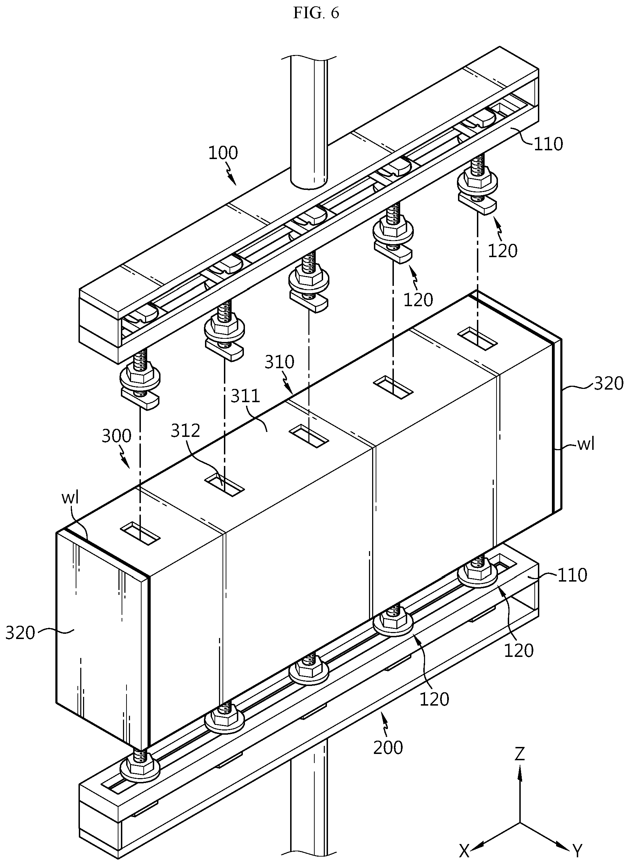

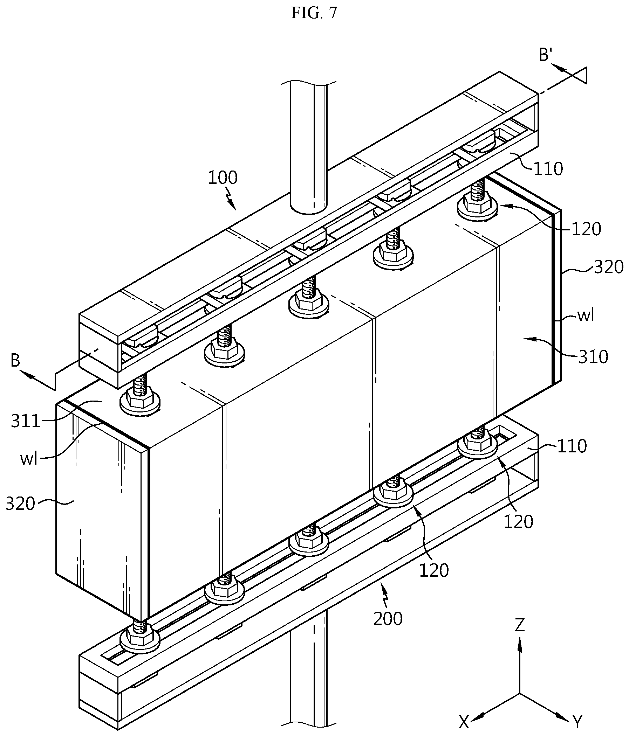

FIG. 4 is a diagram showing an example of a test case 300 used in the testing machine according to an embodiment of the present disclosure. FIG. 5 is a diagram showing another example of the test case 300 used in the testing machine according to an embodiment of the present disclosure. FIG. 6 is a diagram showing an example of the test case 300 partially coupled to the testing machine according to an embodiment of the present disclosure. FIG. 7 is a diagram showing an example of the test case 300 completely coupled to the testing machine according to an embodiment of the present disclosure.

Referring to FIGs. 4 to 7, the testing machine according to an embodiment of the present disclosure may be a testing machine for testing the test case 300 of the battery module including a test frame 310 having an open front surface and an end plate 320 coupled to the front surface of the test frame 310. Additionally, the testing machine according to an embodiment of the present disclosure may include a first pressing module 100 that is coupled to a first side plate 311 of the test frame 310 and a second pressing module 200 that is coupled to a second side plate 311 of the test frame 310 opposite the first side plate 311.

Referring to FIGs. 4 and 5, the test case 300 may include the test frame 310 and the end plate 320. The test frame 310 may provide an internal space. Additionally, the test frame 310 may have a rectangular parallelepiped shape that is open to the front and rear sides or X axis direction. The test frame 310 may have a hole 312 for coupling with the testing machine. For example, the test frame 310 may have the hole 312 in each of the upper side plate 311 and the lower side plate 311. The hole 312 may include a plurality of holes. Additionally, the plurality of holes 312 may be formed in the same shape, and may be arranged at a regular interval. The holes 312 may be long holes. For example, the holes 312 may extend in the front-rear direction or X axis direction or may extend in the left-right direction or Y axis direction. For example, referring to FIG. 3, five holes 312 extended in the front-rear direction may be arranged at a regular interval. Additionally, for example, referring to FIG. 4, five holes 312 extended in the left-right direction may be arranged at a regular interval. Additionally, the holes 312 of the upper side plate 311 and the holes 312 of the lower side plate 311 may be symmetrical. The upper side plate 311 may be referred to as the first side plate 311. Additionally, the lower side plate 311 may be referred to as the second side plate 311.

The end plate 320 may be disposed or coupled to each of the front side and the rear side of the test frame 310. Alternatively, the end plate 320 may be disposed or coupled to each open end of the test frame 310. The end plate 320 and the test frame 310 may be coupled by welding. Additionally, the weld line wl may be formed along the periphery of the end plate 320.

The test frame 310, the end plate 320 or the test case 300 may be formed with a very similar or identical shape, material or structure to the frame 410 and the end plate 420 of the battery module 400.

The first pressing module 100 may be fastened, fixed or coupled to the test frame 310. The first pressing module 100 may be fastened, fixed or coupled to the first side plate 311. The first pressing module 100 may be fastened, fixed or coupled to the hole 312 of the first side plate 311. The second pressing module 200 may be fastened, fixed or coupled to the test frame 310. The second pressing module 200 may be fastened, fixed or coupled to the first side plate 311. The second pressing module 200 may be fastened, fixed or coupled to the hole 312 of the first side plate 311.

By this configuration of the present disclosure, the test case 300 may be tested by the testing machine. The pressure applied to the test case 300 by the testing machine may be a very similar value to the pressure applied to the battery module 400 in the event of swelling. It may take a lot of time to measure durability of the test case 300 that has undergone swelling multiple times. However, the testing machine according to the present disclosure may mechanically test the swelling pressure multiple times in a relatively short time.

Referring to FIGs. 4 to 7, the first pressing module 100 or the second pressing module 200 of the testing machine according to an embodiment of the present disclosure may be movably configured in the top-down direction. For example, the first pressing module 100 may be movable in the top-down direction and the second pressing module 200 may be kept in a fixed state. Alternatively, the second pressing module 200 may be movable in the top-down direction and the first pressing module 100 may be kept in a fixed state. Alternatively, both the first pressing module 100 and the second pressing module 200 may be movable in the top-down direction. In this instance, the movement direction of the first pressing module 100 and the movement direction of the second pressing module 200 may be opposite to each other.

By this configuration of the present disclosure, the testing machine may force the test frame 310 to be stretched and recover in the top-down direction or Z axis direction. Accordingly, fatigue life of the coupling part between the test frame 310 and the end plate 320 of the test case 300 may be evaluated quickly.

Referring to FIGs. 4 to 7, the first pressing module 100 of the testing machine according to an embodiment of the present disclosure may include a pressing bar 110 extended in the front-rear direction and a pressing unit 120 extended downward from the pressing bar 110 and coupled to the first side plate 311.

The pressing bar 110 and the first side plate 311 may face each other. Additionally, the pressing bar 110 may extend along the long side of the first side plate 311. The first pressing module 100 may include the pressing unit 120. The top of the pressing unit 120 may be coupled, fastened or fixed to the pressing bar 110. The bottom of the pressing unit 120 may be coupled, fastened or fixed to the first side plate 311.

The second pressing module 200 and the first pressing module 100 may be symmetrical. The second pressing module 200 may include the pressing bar 110 and the pressing unit 120. The pressing bar 110 of the second pressing module 200 and the first side plate 311 may face each other. Additionally, the pressing bar 110 may extend along the long side of the first side plate 311. The top of the pressing unit 120 of the second pressing module 200 may be coupled, fastened or fixed to the first side plate 311. The bottom of the pressing unit 120 may be coupled, fastened or fixed to the pressing bar 110.

By this configuration of the present disclosure, the testing machine may test the test case 300 having different shapes or sizes. The pressing unit 120 of the testing machine may be configured to be coupled to the test case 300 of different shapes.

Referring to FIGs. 4 to 7, the pressing unit 120 of the testing machine according to an embodiment of the present disclosure may include a plurality of pressing units, and the plurality of pressing units may be arranged along the length direction of the pressing bar 110.

The number of pressing units 120 of the first pressing module 100 may be properly selected according to the shape of the test case 300 or the pressure to be applied to the test case 300. The pressing units 120 of the first pressing module 100 and the pressing units 120 of the second pressing module 200 may be symmetrical. For example, the number of pressing units 120 of the first pressing module 100 and the number of pressing units 120 of the second pressing module 200 may be equal. Additionally, the position and interval of the pressing units 120 of the first pressing module 100 may be the same as the position and interval of the pressing units 120 of the second pressing module 200. Referring to FIGs. 6 and 7, each of the first pressing module 100 and the second pressing module 200 may include five pressing units 120.

By this configuration of the present disclosure, the testing machine may apply different pressures to the test case. The pressure may vary by adjusting the number of pressing units of the testing machine and the interval between the pressing units.

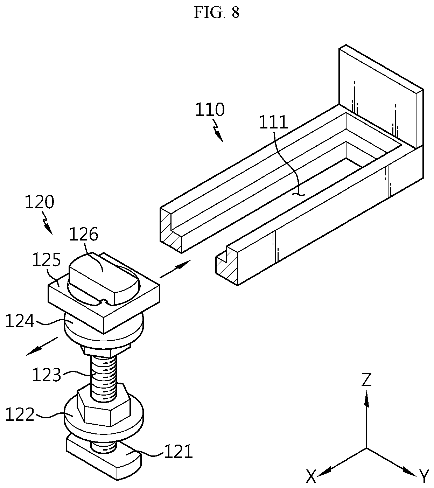

FIG. 8 is a diagram showing the pressing unit of the testing machine according to an embodiment of the present disclosure.

Referring to FIGs. 4 to 8, the pressing unit of the testing machine according to an embodiment of the present disclosure may be movably configured along the length direction of the pressing bar.

The pressing bar 110 may include a guide hole 111 extended along the length direction of the pressing bar 110 or X axis direction. The pressing unit 120 may be movably configured in the front-rear direction or X axis direction along the guide hole 111 of the pressing bar. The interval between the pressing units 120 of the first pressing module 100 may be properly adjusted according to the shape of the test case or the pressure to be applied to the test case. The plurality of pressing units 120 may be fastened, coupled, fixed to the pressing bar 110, or may be unfastened, uncoupled, unfixed from the pressing bar 110. When the pressing units 120 are unfasten, uncoupled, unfixed from the pressing bar 110, the pressing units 120 may move along the length direction of the pressing bar 110 or the guide hole 111, and the interval between the pressing units 120 may be adjusted. Additionally, when the movement of the pressing units 120 is completed, the pressing units 120 may be fastened, coupled, fixed to the pressing bar 110. The pressing units 120 of the first pressing module 100 and the pressing units 120 of the second pressing module 200 may be symmetrical.

By this configuration of the present disclosure, the testing machine may apply different pressures to the test case 300. The pressure may vary by adjusting the number of pressing units 120 of the testing machine and the interval between the pressing units 120.

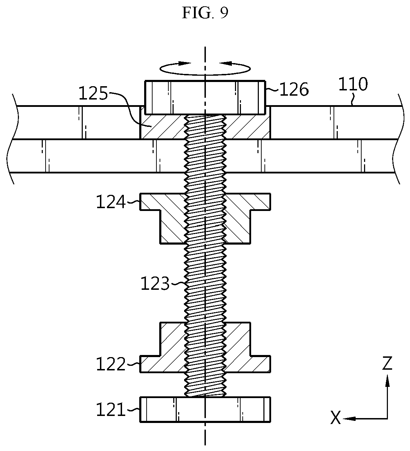

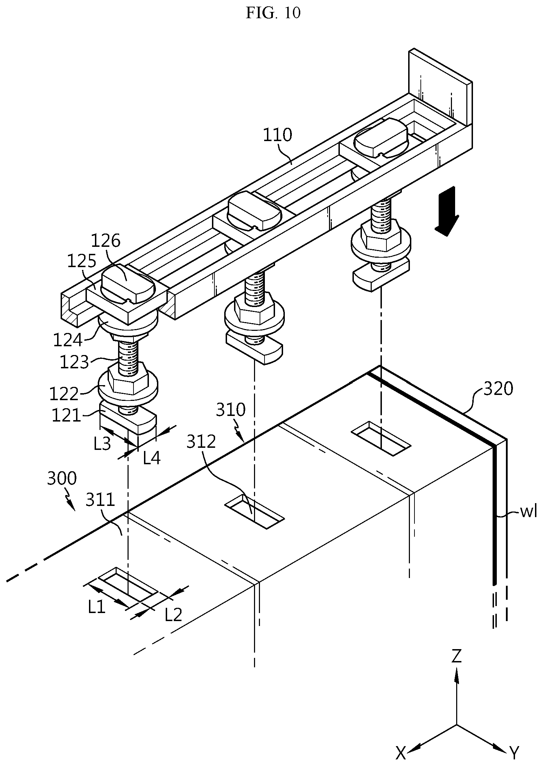

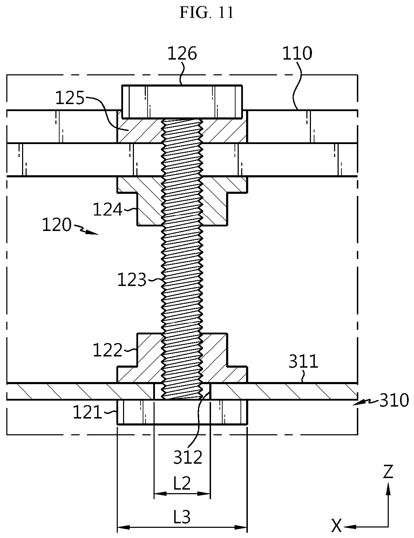

FIG. 9 is a diagram showing the coupling between the pressing bar 110 and the pressing unit 120. FIG. 10 is a diagram showing an example of coupling the test case 300 to the pressing unit 120 of the testing machine according to an embodiment of the present disclosure. FIG. 11 is a cross-sectional view of FIG. 7, taking along the line B-B'.

Referring to FIGs. 4 to 11, the test frame 310 of the testing machine according to an embodiment of the present disclosure may include the hole 312 that is extended and passes through the first side plate 311. Additionally, the pressing unit 120 of the testing machine according to an embodiment of the present disclosure may include a coupling bar 123 that extends downward from the pressing bar 110 and passes through the hole 312 and a pressing portion 121 disposed in the coupling bar 123 and located at the internal space of the test frame 310.

By this configuration of the present disclosure, the pressing portion 121 of the testing machine may be fastened, coupled or fixed to the first side plate 311. Accordingly, the testing machine may stably apply the pressure to the test frame 310.

Referring to FIGs. 9 to 11, the diameter of the pressing portion 121 of the testing machine according to an embodiment of the present disclosure may be smaller than the diameter of the hole 312. Additionally, the coupling bar 123 of the testing machine according to an embodiment of the present disclosure may be rotatably configured.

The hole 312 may have a length L1 in the left-right direction or Y axis direction. Additionally, the hole 312 may have a width L2 in the front-rear direction or X axis direction. The length L1 of the hole 312 may be longer than the width L2.

The pressing portion 121 may have a length L3. Additionally, the pressing portion 121 may have a width L4 in the front-rear direction. The length L3 of the pressing portion 121 may be longer than the width L4.

The length L3 of the pressing portion 121 may be equal to or smaller than the length L1 of the hole 312. The width L4 of the pressing portion 121 may be equal to or smaller than the width L2 of the hole 312. Additionally, the length L3 of the pressing portion 121 may be larger than the width L2 of the hole 312.

The pressing portion 121 and the coupling bar 123 may be integrally formed. Alternatively, the pressing portion 121 and the coupling bar 123 may be separate components, and the pressing portion 121 may be coupled, fastened, fixed to the coupling bar 123. The pressing portion 121 may be configured to rotate with the coupling bar 123 by rotation of the coupling bar 123.

By this configuration of the present disclosure, the pressing portion 121 may pass through the hole 312, and be inserted into the test frame 310. Additionally, the inserted pressing portion 121 may rotate and be fitted or locked in the hole 312. Accordingly, the pressing portion 121 of the testing machine may be fastened, coupled or fixed to the first side plate 311. Additionally, the testing machine may stably apply the pressure to the test frame 310.

Referring to FIGs. 9 to 11, the coupling bar 110 of the testing machine according to an embodiment of the present disclosure may have a screw thread along the length direction, and the pressing unit 120 may further include a fixing portion 122 coupled to the screw thread of the coupling bar 110. Additionally, the first side plate 311 of the testing machine according to an embodiment of the present disclosure may be fixed between the pressing portion 121 and the fixing portion 122.

The coupling bar 110 may extend in the top-down direction or Z axis direction. Additionally, the screw thread may be formed at the coupling bar 110 in the top-down direction or Z axis direction. The fixing portion 122 may be engaged with the screw thread of the coupling bar 110. The fixing portion 122 may be movable along the length direction of the coupling bar 110. When the pressing portion 121 inserted into the test frame 310 rotates and the fixing portion 122 moves in the downward direction or -Z axis direction, the pressing portion 121 may be fixed, fitted or locked in the hole 312.

Additionally, an adjustment portion 126 may be integrally formed with the coupling bar 123. Alternatively, the adjustment portion 126 and the coupling bar 123 may be separate components, and the adjustment portion 126 may be coupled, fastened, fixed to the coupling bar 123. The adjustment portion 126 may be configured to rotate with the coupling bar 123 by the rotation of the coupling bar 123. Additionally, the adjustment portion 126 may extend in the same direction as the length direction of the pressing portion 121. Accordingly, the position of the pressing portion 121 may be adjusted or detected by rotating the adjustment portion 126.

A head 125 and a fixing portion 124 may be located between the adjustment portion 126 and the fixing portion 122. The head 125 and the fixing portion 124 may be disposed with the pressing bar 110 interposed between them. Each of the head 125 and the fixing portion 124 may be engaged with the screw thread of the coupling bar 123. The head 125 and the fixing portion 124 may fasten, couple, fix the pressing unit 120 to the pressing bar 110, or unfasten, uncouple, unfix the pressing unit 120 from the pressing bar 110. When the pressing unit 120 is unfastened, uncoupled, unfixed from the pressing bar 110, the pressing unit 120 may move along the length direction of the pressing bar 110 or the guide hole 111, and the interval between the pressing units 120 may be adjusted. Additionally, when the movement of the pressing unit 120 is completed, as the head 125 and the fixing portion 124 are engaged with each other, the pressing unit 120 may be fastened, coupled, fixed to the pressing bar 110.

By this configuration of the present disclosure, the pressing unit 120 may be stably fixed to the first side plate 311.

Referring to FIGs. 4, 5 and 9 to 11, the hole 312 of the test case 300 that is tested by the testing machine according to an embodiment of the present disclosure may extend in the front-rear direction or the left-right direction.

The hole 312 may extend, for example, in the front-rear direction or X axis direction, or in the left-right direction or Y axis direction.

By this configuration of the present disclosure, various pressure tests may be performed by changing the shape of the hole 312 of the test case 300, the number of holes 312 and the interval between the holes 312. Additionally, the testing machine according to an embodiment of the present disclosure may conduct a test after making adjustment to respond to the test case 300 of different shapes.

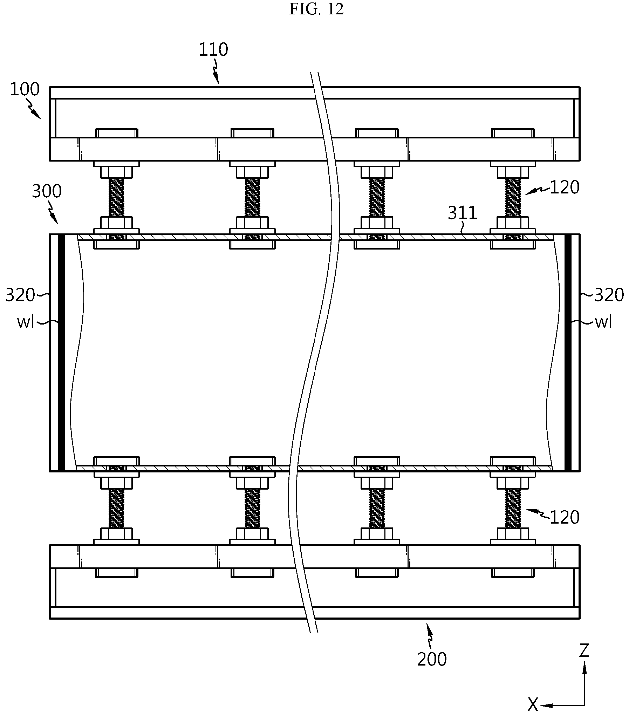

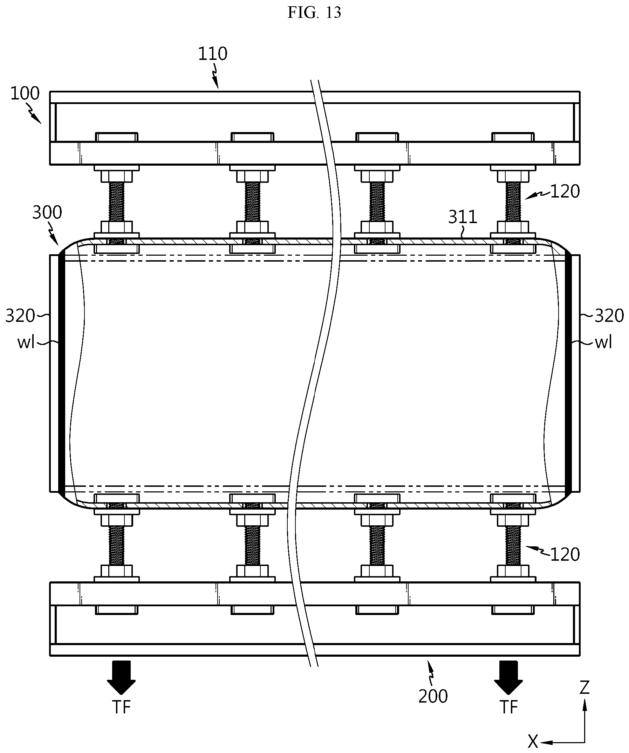

FIG. 12 is a diagram showing the test case 300 without load applied by the testing machine according to an embodiment of the present disclosure. FIG. 13 is a diagram showing the test case 300 with load applied by the testing machine according to an embodiment of the present disclosure.

Referring to FIGs. 12 and 13, the test may be performed by coupling the testing machine according to an embodiment of the present disclosure to the test case 300, stopping the first pressing module 100, and moving the second pressing module 200 to stretch the test frame 310 in the top-down direction or Z axis direction. In this instance, a tensile force (TF) may be applied in the downward direction or -Z axis direction. Accordingly, the test frame 310 may be stretched in the top-down direction or Z axis direction. Additionally, when the tensile force is removed, the test frame 310 may return to the original state.

Additionally, the test may be performed by coupling the testing machine according to an embodiment of the present disclosure to the test case 300, stopping the second pressing module 200 and moving the first pressing module 100 to make a repetitive reciprocating motion.

By this configuration or method of the present disclosure, it may be possible to obtain the swelling-induced fatigue life evaluation result without including the battery cell 430 in the test case 300. Additionally, it may be possible to obtain the fatigue life evaluation result quickly by performing the repetitive test in a relatively short time.

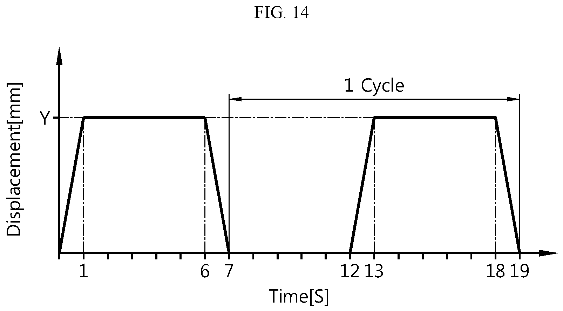

FIG. 14 is a graph showing an example of a method using the testing machine according to an embodiment of the present disclosure.

Referring to FIGs. 12 to 14, the testing machine according to an embodiment of the present disclosure may repeatedly apply the pressure to the test case 300. For example, the pressure may be applied to the test case 300 by moving the second pressing module 200 in the downward direction or -Z axis direction while keeping the first pressing module 100 in the fixed state. In this instance, the pressure may be repeatedly applied at a regular time interval. Referring to the graph of FIG. 14, the pressure may be repeatedly applied at an interval of 12 seconds. Additionally, displacement on Y axis of the graph may be the movement distance of the second pressing module 200. For example, after the second pressing module 200 is allowed to move to the maximum displacement for 1 second without pressure applied to the test case 300, the maximum displacement may be maintained for 5 seconds. Additionally, the second pressing module 200 may be allowed to return to the initial state or move for 1 second. Additionally, after it is kept in the initial state for 5 seconds, the second pressing module 200 may be allowed to move again.

By this configuration or method of the present disclosure, after applying different pressures to the test case 300 and releasing the pressure, the fatigue life evaluation result of the weld line wl coupling the test frame 310 to the end plate 320 may be obtained quickly.

By this configuration of the present disclosure, it may be possible to determine whether the welding succeeded quickly and accurately.

The battery cell 600 according to an aspect of the present disclosure may include a plurality of metal materials 610 welded by the welding device of the present disclosure. Specifically, the plurality of metal materials 610 welded by the welding device of the present disclosure may be a plurality of electrode tabs 610.

The terms indicating directions such as upper, lower, left, right, front and rear are used for convenience of description, but it is obvious to those skilled in the art that the terms may change depending on the position of the stated element or an observer.

Although the present disclosure has been hereinabove described by a limited number of embodiments and drawings, the present disclosure is not limited thereto, and it is obvious to those skilled in the art that a variety of changes and modifications may be made thereto within the technical aspect of the present disclosure and the appended claims and equivalents thereof.

## Claims

1. A testing machine for testing a test case of a battery module including a test frame having an open front surface and an end plate coupled to the front surface of the test frame, the testing machine comprising:
a first pressing module that is coupled to a first side plate of the test frame; and
a second pressing module that is coupled to a second side plate of the test frame opposite the first side plate.

2. The testing machine according to claim 1, wherein the first pressing module or the second pressing module is movably configured in a top-down direction.

3. The testing machine according to claim 1, wherein the first pressing module includes:
a pressing bar extended in a front-rear direction; and
a pressing unit extended downward from the pressing bar and coupled to the first side plate.

4. The testing machine according to claim 3, wherein the pressing unit includes a plurality of pressing units and the plurality of pressing units is arranged along a length direction of the pressing bar.

5. The testing machine according to claim 3, wherein the pressing unit is movably configured along a length direction of the pressing bar.

6. The testing machine according to claim 3, wherein the test frame includes a hole that is extended and passes through the first side plate, and
wherein the pressing unit includes:
a coupling bar extended downward from the pressing bar, and passing through the hole; and
a pressing portion disposed in the coupling bar and located at an internal space of the test frame.

7. The testing machine according to claim 6, wherein a diameter of the pressing portion is smaller than a diameter of the hole, and
wherein the coupling bar is rotatably configured.

8. The testing machine according to claim 6, wherein the coupling bar has a screw thread along a length direction,
wherein the pressing unit further includes a fixing portion coupled to the screw thread of the coupling bar, and
wherein the first side plate is fixed between the pressing portion and the fixing portion.

9. The testing machine according to claim 6, wherein the hole extends in a front-rear direction or a left-right direction.

10. The testing machine according to claim 1, wherein each of the first pressing module and the second pressing module includes a plurality of pressing units, and
wherein the plurality of pressing units of the first pressing module and the plurality of pressing units of the second pressing module are symmetrical with respect to the test frame.

11. A test method using the testing machine according to any one of claims 1 to 10, wherein the test method comprises stopping the first pressing module and moving the second pressing module to stretch the test frame in the top-down direction.

12. A test method using the testing machine according to any one of claims 1 to 10, wherein the test method comprises stopping the first pressing module and moving the second pressing module to make a repetitive reciprocating motion.
